# EUROPÄISCHE PATENTANMELDUNG

(11) **EP 3 664 244 A1**
(43) Veröffentlichungstag der Anmeldung: **10.06.2020**
(21) Anmeldenummer: 19213169.6
(22) Anmeldetag: 03.12.2019
(51) Int. Cl.: H02J 3/18, H02J 7/00, H02J 7/02, H02J 3/16

(54) **LADESTATION MIT LASTMANAGEMENT DURCH ANHEBUNG DER VERSORGUNGSSPANNUNG**

(30) Priorität: 04.12.2018 DE 102018130888
(71) Anmelder: Innogy SE, 45128 Essen (DE)
(72) Erfinder: NOBIS, Philipp, 44269 Dortmund (DE)
(74) Vertreter: Cohausz & Florack

(57) **Zusammenfassung**

Die Erfindung betrifft eine Ladestation (2), insbesondere Ladesäule, zum Laden eines elektrisch betriebenen Fahrzeugs (4), mit einem netzseitigen Wechselstromanschluss (10) zum Anschließen der Ladestation (2) an ein Verteilnetz (12), mit einem versorgungsseitigen Gleichstromanschluss (8) zum Anschließen eines elektrisch betriebenen Fahrzeugs (4) an die Ladestation (2) für einen Ladevorgang und mit einem Gleichrichter (16), der dazu eingerichtet ist, durch Gleichrichten eines über den netzseitigen Wechselstromanschluss (10) bereitgestellten Wechselstroms einen Gleichstrom als Ladestrom an dem versorgungsseitigen Gleichstromanschluss (8) bereitzustellen, wobei der Gleichrichter (16) weiter dazu eingerichtet ist, am netzseitigen Wechselstromanschluss (10) kapazitive Blindleistung bereitzustellen. Die Erfindung betrifft weiterhin ein Verfahren zum Steuern einer Ladestation (2), ausgeführt auf mindestens einer Steuereinrichtung (18, 34) einer Ladestation (2), bei dem ein netzseitig bereitgestellter Wechselstrom zu einem Gleichstrom gleichgerichtet und als Ladestrom zum Laden eines elektrisch betriebenen Fahrzeugs (4) bereitgestellt wird und bei dem am netzseitigen Wechselstromanschluss kapazitive Blindleistung bereitgestellt wird.

## Beschreibung

Die Erfindung betrifft eine Ladestation, insbesondere eine Ladesäule, zum Laden eines elektrisch betriebenen Fahrzeugs, mit einem netzseitigen Wechselstromanschluss zum Anschließen der Ladestation an ein Verteilnetz, mit einem versorgungsseitigen Gleichstromanschluss zum Anschließen eines elektrisch betriebenen Fahrzeugs an die Ladestation für einen Ladevorgang und mit einem Gleichrichter, der dazu eingerichtet ist, durch Gleichrichten eines über den netzseitigen Wechselstromanschluss bereitgestellten Wechselstroms einen Gleichstrom als Ladestrom an dem versorgungsseitigen Gleichstromanschluss bereitzustellen. Weiterhin betrifft die Erfindung ein Verfahren zum Steuern einer Ladestation, ausgeführt auf mindestens einer Steuereinrichtung einer Ladestation.

Gleichstromladestationen zum Laden elektrisch betriebener Fahrzeuge werden in der Regel über ein Wechselstromnetz mit Energie versorgt. Über die Stromleitungen (Strang) des Wechselstromnetzes gibt es nach dem Ohm'schen Gesetz U = R*I einen Spannungsabfall, der umso höher ausfällt, je länger die Stromleitung und je höher der Strom ist. R ist der elektrische Widerstand und abhängig von der Leitungslänge. Am Ende eines Strangs ist die Spannung daher geringer als am Anfang eines Strangs, an dem der Strang an das übrige Versorgungsnetz angeschlossen ist. Dies führt dazu, dass die verfügbare Leistung (P = U * I) am Strangende geringer ist als am Stranganfang, da es einen Spannungsabfall über die Leitung gibt.

Im Stand der Technik wird diesem Phänomen entgegengewirkt, indem Kabel mit größeren Querschnitten verlegt werden, da ein Kabel mit größerem Kabelquerschnitt zum einen einen geringeren spezifischen Widerstand aufweist und zum anderen eine höhere Stromtragfähigkeit aufweist. Diese Vorgehensweise ist aufgrund der größeren erforderlichen Kupfermengen jedoch kostenintensiv und insbesondere in solchen Fällen ineffizient, in denen hohe Lastspitzen nur für kurze Zeiträume, z.B. für wenige Minuten während eines Ladevorgangs, auftreten.

Vor diesem Hintergrund liegt der vorliegenden Erfindung die Aufgabe zu Grunde, eine kostengünstigere Lösung für einen effizienten Ladevorgang an einer Gleichstrom-Ladestation vorzuschlagen.

Diese Aufgabe wird bei einer Ladestation, insbesondere eine Ladesäule, zum Laden eines elektrisch betriebenen Fahrzeugs, mit einem netzseitigen Wechselstromanschluss zum Anschließen der Ladestation an ein Verteilnetz, mit einem versorgungsseitigen Gleichstromanschluss zum Anschließen eines elektrisch betriebenen Fahrzeugs an die Ladestation für einen Ladevorgang und mit einem Gleichrichter, der dazu eingerichtet ist, durch Gleichrichten eines über den netzseitigen Wechselstromanschluss bereitgestellten Wechselstroms einen Gleichstrom als Ladestrom an dem versorgungsseitigen Gleichstromanschluss bereitzustellen, erfindungsgemäß dadurch gelöst, dass der Gleichrichter weiter dazu eingerichtet ist, am netzseitigen Wechselstromanschluss kapazitive Blindleistung bereitzustellen.

Durch die Bereitstellung kapazitiver Blindleistung am netzseitigen Wechselstromanschluss wird die netzseitige Spannung (Versorgungsspannung) erhöht. Auf diese Weise kann einer netzbedingten Spannungsreduktion zum Beispiel bei Anschluss der Ladestation im Bereich eines Strangendes entgegen gewirkt werden, so dass eine erhöhte Versorgungsspannung zur Verfügung steht und damit dem Versorgungsnetz eine größere Leistung entnommen werden kann. Da die Versorgungsspannung erhöht wird, ist die Erhöhung der Leistungsentnahme bei gleichbleibender Stromtragfähigkeit möglich. Die beschriebene Ladestation ermöglicht daher einen effizienteren Ladevorgang und macht das Verlegen von Kupferkabeln mit erhöhtem Querschnitt entbehrlich, so dass Infrastruktur- und Infrastrukturausbaukosten reduziert werden. Auf diese Weise wird eine kostengünstige und massenmarkttaugliche Lösung bereitgestellt, um geringere Leitungsquerschnitte bei längeren Versorgungsleitungen verwenden zu können.

Die Ladestation weist einen netzseitigen Wechselstromanschluss zum Anschließen der Ladestation an ein Verteilnetz auf. Der netzseitige Wechselstromanschluss kann insbesondere zum Anschluss der Ladestation an ein Erdkabel des örtlichen Verteilnetzes eingerichtet und angeordnet sein. Ladestationen, insbesondere Ladesäulen, werden häufig durch Drehstrom versorgt. Entsprechend handelt es sich bei dem Wechselstromanschluss vorzugsweise um einen Dreiphasenwechselstromanschluss.

Die Ladestation weist weiter einen versorgungsseitigen Gleichstromanschluss zum Anschließen eines elektrisch betriebenen Fahrzeugs an die Ladestation für einen Ladevorgang auf. Insbesondere kann die Ladestation eine Ladesteckdose aufweisen, über die ein elektrisches Fahrzeug unter Verwendung eines Ladekabels mit der Ladestation verbunden werden kann.

Weiterhin weist die Ladestation einen Gleichrichter auf, der dazu eingerichtet ist, durch Gleichrichten eines über den netzseitigen Wechselstromanschluss bereitgestellten Wechselstroms einen Gleichstrom als Ladestrom an dem versorgungsseitigen Gleichstromanschluss bereitzustellen. Vorzugsweise ist eine Steuereinrichtung vorgesehen, die den Gleichrichter steuert, so dass dieser bei Durchführung eines Ladevorgangs den Ladestrom bereitstellt. Weist der Gleichrichter beispielsweise steuerbare Dioden, insbesondere Thyristoren, oder Transistoren, insbesondere IGBTs, auf, so kann die Steuereinrichtung insbesondere dazu eingerichtet sein, die steuerbare Dioden oder die Transistoren anzusteuern.

Der Gleichrichter ist weiterhin dazu eingerichtet, am netzseitigen Wechselstromanschluss kapazitive Blindleistung bereitzustellen. Zu diesem Zweck kann insbesondere eine Steuereinrichtung zur Steuerung des Gleichrichters dazu eingerichtet sein, den Gleichrichter derart zu steuern, so dass am netzseitigen Wechselstromanschluss kapazitive Blindleistung bereitgestellt wird. Bei einer Ausführungsform umfasst die Ladestation entsprechend eine Steuereinrichtung, die dazu eingerichtet ist, die Bereitstellung kapazitiver Blindleistung am netzseitigen Wechselstromanschluss durch den Gleichrichter zu steuern.

Die oben genannte Aufgabe wird erfindungsgemäß weiterhin gelöst durch ein Verfahren zum Steuern einer Ladestation, ausgeführt auf mindestens einer Steuereinrichtung einer Ladestation, insbesondere der zuvor beschriebenen Ladestation, bei dem ein netzseitig bereitgestellter Wechselstrom zu einem Gleichstrom gleichgerichtet und als Ladestrom zum Laden eines elektrisch betriebenen Fahrzeugs bereitgestellt wird und bei dem am netzseitigen Wechselstromanschluss kapazitive Blindleistung bereitgestellt wird. Die mindestens eine Steuereinrichtung kann insbesondere mindestens einen Mikroprozessor und einen Speicher mit Befehlen aufweisen, deren Ausführung auf dem mindestens einen Mikroprozessor die entsprechende Steuerung der Ladestation bewirkt.

Im Folgenden werden verschiedene Ausführungsformen der Ladestation und des Verfahrens beschrieben, wobei die einzelnen Ausführungsformen unabhängig voneinander sowohl für die Ladestation als auch für das Verfahren gelten. Die einzelnen Ausführungsformen sind zudem untereinander kombinierbar.

Bei einer Ausführungsform ist der Gleichrichter dazu eingerichtet, die kapazitive Blindleistung abhängig von der Höhe der Versorgungsspannung am netzseitigen Wechselstromanschluss bereitzustellen. Bei einer entsprechenden Ausführungsform des Verfahrens wird die kapazitive Blindleistung abhängig von der Höhe der Versorgungsspannung am netzseitigen Wechselstromanschluss bereitgestellt. Auf diese Weise kann die Bereitstellung kapazitiver Blindleistung beispielsweise gezielt dann durchgeführt werden, wenn die Versorgungsspannung unter einer vorgegebenen Mindestspannung liegt oder unter eine vorgegebene Mindestspannung fällt.

Die Ladestation weist vorzugsweise einen netzseitigen Spannungsmesser auf, der dazu eingerichtet ist, einen Wert für die Höhe einer an dem netzseitigen Wechselstromanschluss anliegenden Versorgungsspannung, insbesondere die Spannung einer oder mehrerer an den Wechselstromanschluss angeschlossenen Phasen zueinander oder zu einem Spannungsbezugspunkt, zum Beispiel zum Nullleiter oder zur Erde, zu messen. Die Steuereinrichtung ist vorzugsweise dazu eingerichtet, die Bereitstellung der kapazitiven Blindleistung abhängig von dem von dem Spannungsmesser gemessenen Wert für die Höhe der Versorgungsspannung zu steuern.

Bei einer weiteren Ausführungsform ist der Gleichrichter dazu eingerichtet, die Höhe der am netzseitigen Wechselstromanschluss bereitgestellten kapazitiven Blindleistung abhängig von der Höhe der Versorgungsspannung am netzseitigen Wechselstromanschluss zu steuern. Bei einer entsprechenden Ausführungsform des Verfahrens wird die Höhe der am netzseitigen Wechselstromanschluss bereitgestellten kapazitiven Blindleistung abhängig von der Höhe der Versorgungsspannung am netzseitigen Wechselstromanschluss gesteuert. Auf diese Weise kann der Umfang, in dem kapazitive Blindleistung bereitgestellt wird, abhängig von der durch das Versorgungsnetz bereitgestellten Versorgungsspannung eingestellt werden, so dass zum Beispiel bei einem stärkeren netzseitigen Spannungsabfall mehr kapazitive Blindleistung erzeugt werden kann, um dem Spannungsabfall stärker entgegenzuwirken.

Bei einer weiteren Ausführungsform ist der Gleichrichter dazu eingerichtet, die Höhe der am netzseitigen Wechselstromanschluss bereitgestellten kapazitiven Blindleistung so einzustellen, dass eine vorgegebene oder vorgebbare Wirkleistung erreicht wird. Bei einer entsprechenden Ausführungsform des Verfahrens wird die Höhe der am netzseitigen Wechselstromanschluss bereitgestellten kapazitiven Blindleistung so eingestellt, dass eine vorgegebene oder vorgebbare Wirkleistung erreicht wird. Bei der Wirkleistung kann es sich insbesondere um die vom Verteilnetz an die Ladestation abgegebene Wirkleistung oder um die von der Ladestation über den versorgungsseitigen Gleichstromanschluss abgegebene Wirkleistung handeln. Auf diese Weise kann unabhängig von einem Spannungsabfall im Versorgungsnetz bzw. unabhängig von der Positionierung des Anschlusses der Ladestation in einem Strang eines Versorgungsnetzes eine gleichbleibende Ladeleistung erreicht werden.

Bei einer weiteren Ausführungsform erfolgt die Bereitstellung der kapazitiven Blindleistung für die Zeitdauer eines laufenden Ladevorgangs. Auf diese Weise wird die Bereitstellung der kapazitiven Blindleistung auf den Zeitraum beschränkt, in dem die Erhöhung der Versorgungsspannung erforderlich ist. Dadurch wird die Netzbelastung reduziert.

Bei einer weiteren Ausführungsform ist die Steuereinrichtung dazu eingerichtet, eine Steuerung der Ladestation entsprechend dem zuvor beschriebenen Verfahren oder einer Ausführungsform davon zu steuern. Insbesondere kann die Steuereinrichtung mindestens einen Mikroprozessor und einen Speicher mit Befehlen aufweisen, deren Ausführung auf dem mindestens einen Mikroprozessor der Steuereinrichtung die Steuerung der Ladestation entsprechend dem zuvor beschriebenen Verfahren oder einer Ausführungsform davon bewirkt.

Weitere Vorteile und Merkmale der Ladestation und des Verfahrens ergeben sich aus der nachfolgenden Beschreibung von Ausführungsbeispielen, wobei auf die beigefügte Zeichnung Bezug genommen wird.

In der Zeichnung zeigen,
- Fig. 1: ein Ausführungsbeispiel der Ladestation,
- Fig. 2: die zentrale Steuereinrichtung der Ladestation aus Fig. 1,
- Fig. 3: ein Schaltbild des Gleichrichters der Ladestation aus Fig. 1,
- Fig. 4: ein Diagramm mit beispielhaften Steuerspannungen für den Gleichrichter aus Fig. 3 ohne netzseitiger Bereitstellung von kapazitiver Blindleistung und
- Fig. 5: ein Diagramm mit beispielhaften Steuerspannungen für den Gleichrichter aus Fig. 3 bei netzseitiger Bereitstellung von kapazitiver Blindleistung.

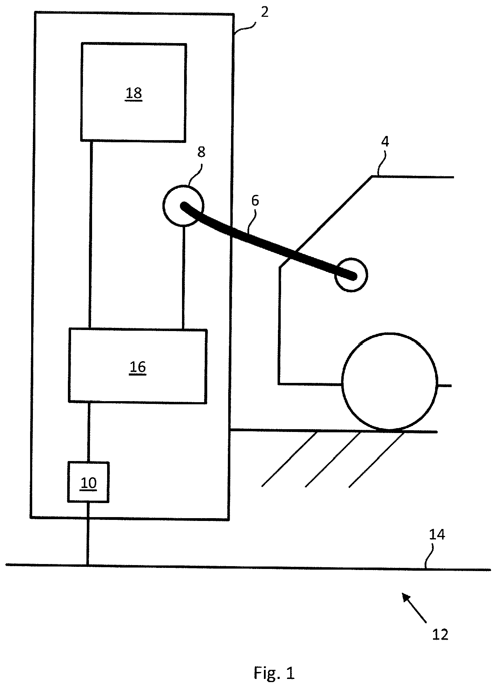

Fig.1 zeigt ein Ausführungsbeispiel der Ladestation 2. Die Ladestation 2 ist vorliegend als Ladesäule zum Laden eines elektrisch betriebenen Fahrzeugs 4 ausgebildet, das für einen Ladevorgang über ein Ladekabel 6 an einen versorgungsseitigen Gleichstromanschluss 8 in Form einer Ladesteckdose der Ladestation 2 angeschlossen werden kann.

Die Ladestation weist einen netzseitigen Wechselstromanschluss 10 auf, mit der die Ladestation 2 an ein örtliches Verteilnetz 12 angeschlossen werden kann, von dem in Fig. 1 ein Erdkabel 14 dargestellt ist. Der netzseitigen Wechselstromanschluss 10 weist Anschlüsse für drei Phasen (L1, L2 und L3) sowie zwei weitere separate Anschlüsse für Neutralleiter (N) und Schutzleiter (PE) bzw. einen kombinierten Neutralleiter-Schutzleiter-Anschluss (PEN) auf.

Um den über den netzseitigen Wechselstromanschluss 10 aus dem Verteilnetz 12 zur Verfügung stehenden Drehstrom in einen an der Ladesteckdose zur Verfügung zu stellenden Gleichstrom umzuwandeln, weist die Ladestation 2 weiterhin einen Gleichrichter 16 auf.

Die Ladestation 2 kann weitere Komponenten aufweisen, die der Übersicht halber nicht dargestellt sind, insbesondere eine Nutzerschnittstelle wie zum Beispiel einen Touchscreen und eine Messeinheit zur Bestimmung der bei einem Ladevorgang abgegebenen Stromstärke bzw. Leistung zu Abrechnungszwecken.

Zudem ist eine zentrale Steuereinrichtung 18 vorgesehen, die zur Steuerung der Ladestation 2 eingerichtet ist. Die zentrale Steuereinrichtung 18 ist mit verschiedenen Komponenten der Ladestation 2 verbunden, wie zum Beispiel mit der Nutzerschnittstelle, der Messeinheit und dem Gleichrichter 16.

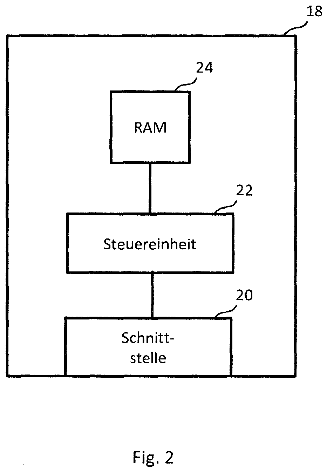

Fig. 2 zeigt einen möglichen Aufbau der zentralen Steuereinrichtung 18. Diese umfasst eine Schnittstelle 20 zur Kommunikation mit anderen Komponenten der Ladestation, insbesondere mit dem Gleichrichter 16, eine Steuereinheit 22, beispielsweise einen Mikroprozessor und einen Speicher 24, auf dem ein Computerprogramm mit Befehlen gespeichert ist, deren Ausführung auf der Steuereinheit 22 der zentralen Steuereinrichtung 18 die Steuerung der Ladestation 2 bewirkt. Die zentrale Steuereinrichtung 18 kann insbesondere dazu eingerichtet sein, die Durchführung eines Ladevorgangs eines an die Ladestation 2 angeschlossenen Fahrzeugs 4 zu steuern.

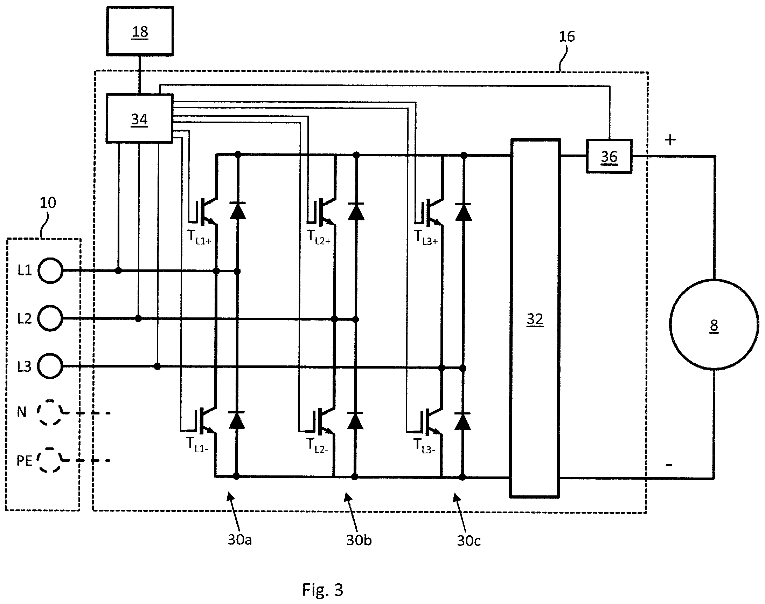

Fig. 3 zeigt einen möglichen Aufbau des Gleichrichters 16 als schematisches Schaltbild.

Der Gleichrichter 16 ist netzseitig an den Wechselstromanschluss 10 angeschlossen, so dass im Betrieb die drei Phasen L1, L2, L3 des an den Wechselstromanschluss 10 angeschlossenen Verteilnetzes 12 am Gleichrichter 16 anliegen. Der Gleichrichter 16 weist für jede der Phasen L1, L2, L3 eine Phasengleichrichterschaltung 30a-c auf. Die Phasengleichrichterschaltungen 30a-c sind zueinander parallel geschaltet und über eine Glättungsschaltung 32 mit dem Pluspol "+" bzw. dem Minuspol "-" des Gleichrichters 16 verbunden. Die Glättungsschaltung 32 dient zur Glättung des erzeugen Gleichstroms und kann beispielsweise einen zwischen Plus- und Minuspol geschalteten Kondensator aufweisen.

In dem dargestellten Ausführungsbeispiel umfasst jede der Phasengleichrichterschaltungen 30a-c zwei in Reihe geschaltete IGBTs, zwischen denen die jeweilige Phase aufgelegt ist. Zu jedem IGBT ist zusätzlich eine antiparallel geschaltete Diode vorgesehen. Die IGBTs werden in Fig. 3 als T_{Lxy} bezeichnet, wobei x die Werte 1, 2 oder 3 annehmen kann und die zugehörige Phase bezeichnet und y die Werte "+" und "-" annehmen kann und die Pluspol-Seite bzw. die Minuspol-Seite des Gleichrichters bezeichnet. T_{L1+} ist demnach der IGBT auf der Pluspol-Seite der L1-Phasengleichrichterschaltung 30a. Anstelle einer IGBT-Schaltung kann alternativ zum Beispiel auch eine Schaltung mit ansteuerbaren Thyristoren verwendet werden.

Die einzelnen IGBTs sind über eine Gleichrichter-Steuereinrichtung 34 ansteuerbar. Die Gleichrichter-Steuereinrichtung 34 ist zudem mit den einzelnen Phasen verbunden und dazu eingerichtet, die Spannung und/oder den Phasenwinkel der einzelnen Phasen zu messen. Weiterhin ist die Gleichrichter-Steuereinrichtung 34 mit einer Messeinheit 36 zum Messen der Spannung und/oder der Stromstärke des vom Gleichrichter 16 an die Ladesteckdose 8 fließenden Stroms verbunden. Bei der Messeinheit 36 kann es sich zum Beispiel um eine für Abrechnungszwecke vorgesehene Messeinheit handeln.

Die Gleichrichter-Steuereinrichtung 34 ist dazu eingerichtet, die IGBTs bei einem Ladevorgang so anzusteuern, dass der über den Wechselstromanschluss 10 bereitgestellte Drehstrom gleichgerichtet und als Lade-Gleichstrom an der Ladesteckdose 8 zur Verfügung steht.

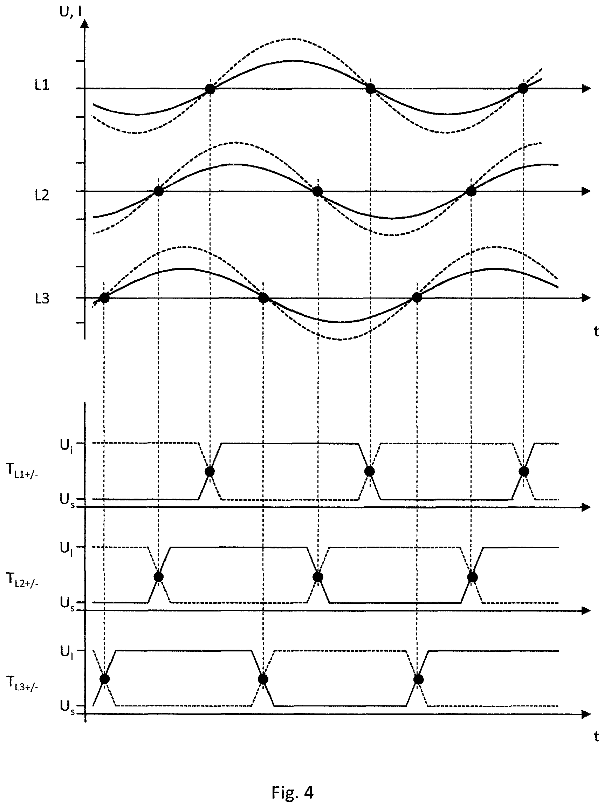

Fig. 4 zeigt ein Beispiel möglicher Steuerspannungen der Gleichrichter-Steuereinrichtung 34 zur Steuerung der IGBTs des Gleichrichters 16. Der obere Graph zeigt untereinander die jeweilige Spannung (gestrichelte Linie) und den jeweiligen Strom (durchgezogene Linie) der Phasen L1, L2 und L3. Der untere Graph zeigt untereinander die jeweiligen Steuerspannungen für die Phasengleichrichterschaltung 30a (T_{L1+/-}), für die Phasengleichrichterschaltung 30b (T_{L2+/-}) und für die Phasengleichrichterschaltung 30c (T_{L3+/-}). Die durchgezogenen Linien zeigen die Steuerspannung des jeweiligen IGBTs T_{Lx+} auf der Pluspol-Seite und die gestrichelten Linien zeigen die Steuerspannung des jeweiligen IGBTs T_{Lx-} auf der Minuspol-Seite des Gleichrichters 16 (mit x = 1, 2, 3).

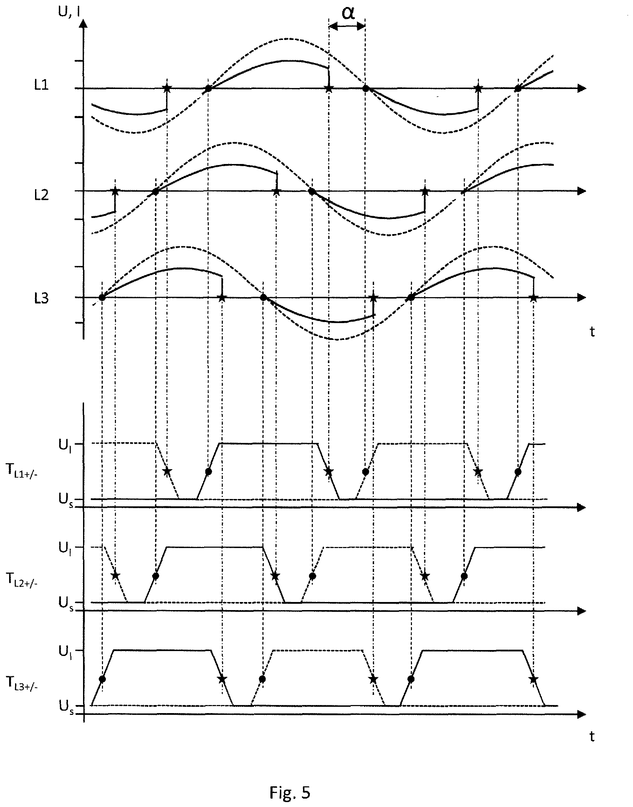

Uₗ ist eine Steuerspannung, um den jeweiligen IGBT leitend zu schalten; Uₛ ist eine Steuerspannung, um den jeweiligen IGBT sperrend zu schalten. Dies gilt sowohl für Fig. 4 als auch für die weiter unten beschriebene Fig. 5. Die für Uₗ und Uₛ zu wählenden Spannungswerte bzw. deren Verhältnis zueinander (z.B. Uₗ > Uₛ oder Uₛ > Uₗ) hängen vom verwendeten IGBT-Typ ab. Die in Fig. 3 dargestellten IGBT-Schaltsymbole sind nur exemplarisch.

Wie der Vergleich der Steuerspannungen mit den Phasenspannungen zeigt, werden die IGBTs so geschaltet, dass während der positiven Halbwelle einer Phase der Pluspol-seitige IGBT leitend geschaltet ist und während der negativen Halbwelle einer Phase der Minuspol-seitige IGBT leitend geschaltet ist. Die Umschaltung der IGBTs erfolgt jeweils beim Spannungsnulldurchgang der jeweiligen Phase (im unteren und oberen Graph hervorgehoben durch schwarze Kreise).

Die Gleichrichter-Steuereinrichtung 34 ist dazu eingerichtet, die Spannung der Phasen L1, L2 und L3 (Versorgungsspannung) und die vom Gleichrichter über die Ladesteckdose abgegebene Leistung, berechnet aus der gemessenen Gleichspannung und dem gemessenen Gleichstrom an der Versorgungsseite des Gleichrichters 16, zu überwachen. Stellt die Gleichrichter-Steuereinrichtung 34 fest, dass eine Phasenspannung unter einen vorgegebenen Spannungssollwert absinkt und/oder dass die über die Ladesteckdose abgegebene Leistung unter einen vorgegebenen Leistungssollwert absinkt, so bewirkt die Gleichrichter-Steuereinrichtung 34, dass am netzseitigen Wechselstromanschluss kapazitive Blindleistung bereitgestellt wird. Dies kann zum Beispiel dadurch erreicht werden, dass die Ansteuerung der IGBTs durch die Gleichrichter-Steuereinrichtung 34 verändert wird.

Fig. 5 zeigt ein Beispiel für mögliche Steuerspannungen der Steuereinrichtung 34 zur Steuerung der IGBTs des Gleichrichters 16, um netzseitig kapazitive Blindleistung bereitzustellen. Wie in Fig. 4 zeigt der obere Graph untereinander die jeweilige Spannung (gestrichelte Linie) und den jeweiligen Strom (durchgezogene Linie) der Phasen L1, L2 und L3. Der untere Graph zeigt untereinander die Steuerspannungen für die Phasengleichrichterschaltung 30a (T_{L1+/-}), für die Phasengleichrichterschaltung 30b (T_{L2+/-}) und für die Phasengleichrichterschaltung 30c (T_{L3+/-}). Die durchgezogenen Linien zeigen die Steuerspannung des jeweiligen IGBTs T_{Lx+} auf der Pluspol-Seite und die gestrichelten Linien zeigen die Steuerspannung des jeweiligen IGBTs T_{Lx-} auf der Minuspol-Seite des Gleichrichters 16 (mit x = 1, 2, 3).

Die netzseitige Bereitstellung kapazitiver Blindleistung kann durch eine Phasenabschnittsteuerung erfolgen. Wie in Fig. 5 beispielhaft illustriert werden die einzelnen IGBTs im zugehörigen Spannungs-Nulldurchgang der betreffenden Phase leitend geschaltet (im unteren und oberen Graph hervorgehoben durch schwarze Kreise). Anders als in Fig. 4 werden die leitend geschalteten IGBTs jedoch nicht erst beim nächsten Spannungs-Nulldurchgang, sondern bereits einen vorgegebenen Phasenwinkel (Phasenabschnittswinkel α) vor dem nächsten Nulldurchgang gesperrt (im unteren und oberen Graph hervorgehoben durch schwarze Sterne). Dies führt netzseitig zu einer Phasenverschiebung zwischen Spannung und Strom und daher zur Bereitstellung kapazitiver Blindleistung. Die Höhe der bereitgestellten kapazitiven Blindleistung kann beispielsweise durch Einstellung des Phasenabschnittswinkels α gesteuert werden.

Die auf diese Weise netzseitig bereitgestellte kapazitive Blindleistung hat zur Folge, dass die netzseitige Spannung ansteigt, so dass über den netzseitigen Wechselstromanschluss 10 bei gleicher Stromstärke eine höhere Leistung übertragen werden kann, wodurch auch eine höhere Leistungsabgabe von der Ladestation 2 über die Ladesteckdose 8 an das aufzuladende Fahrzeug ermöglicht wird.

Die Steuereinrichtung 34 kann insbesondere dazu eingerichtet sein, die Höhe der bereitgestellten kapazitiven Blindleistung abhängig von der Höhe der Versorgungsspannungen zu steuern. Auf diese Weise kann die Bereitstellung der kapazitiven Blindleistung an die jeweiligen Netzbedingungen angepasst werden. Die Bereitstellung der kapazitiven Blindleistung erfolgt vorzugsweise nur während eines Ladevorgangs, um das Netz nicht unnötig zu belasten.

Die beschriebene Steuerung der Ladestation 2 ermöglicht eine höhere Leistungsabgabe bei gleichbleibenden Anforderungen an die Stromtragfähigkeit des Verteilnetzes 12 zur Versorgung der Ladestation 2. Weiterhin kann die Ladestation 2 auf diese Wese Spannungseinbrüchen im Verteilnetz 12 entgegenwirken.

Die Gleichrichter-Steuereinrichtung 34 ist vorzugsweise mit der zentralen Steuereinrichtung 18 verbunden, die der Gleichrichter-Steuereinrichtung 34 zum Beispiel den Spannungs- und/oder Leistungssollwert vorgeben kann. Es ist auch denkbar, dass die Überwachung der netzseitigen Spannung bzw. der abgegebenen Leistung durch die zentrale Steuereinrichtung 18 erfolgt. Ebenso ist es denkbar, dass die zentrale Steuereinrichtung 18, die Bereitstellung kapazitiver Blindleistung am netzseitigen Wechselstromanschluss 10 bewirkt, indem sie den Gleichrichter 16, insbesondere die Gleichrichter-Steuereinrichtung 34 entsprechend ansteuert.

## Patentansprüche

1. Ladestation (2), insbesondere Ladesäule, zum Laden eines elektrisch betriebenen Fahrzeugs (4),
- mit einem netzseitigen Wechselstromanschluss (10) zum Anschließen der Ladestation (2) an ein Verteilnetz (12),
- mit einem versorgungsseitigen Gleichstromanschluss (8) zum Anschließen eines elektrisch betriebenen Fahrzeugs (4) an die Ladestation (2) für einen Ladevorgang und
- mit einem Gleichrichter (16), der dazu eingerichtet ist, durch Gleichrichten eines über den netzseitigen Wechselstromanschluss (10) bereitgestellten Wechselstroms einen Gleichstrom als Ladestrom an dem versorgungsseitigen Gleichstromanschluss (8) bereitzustellen,
**dadurch gekennzeichnet,**
- **dass** der Gleichrichter (16) weiter dazu eingerichtet ist, am netzseitigen Wechselstromanschluss (10) kapazitive Blindleistung bereitzustellen.

2. Ladestation nach Anspruch 1,
weiter umfassend eine Steuereinrichtung (18, 34) die dazu eingerichtet ist, die Bereitstellung kapazitiver Blindleistung am netzseitigen Wechselstromanschluss (10) durch den Gleichrichter (16) zu steuern.

3. Ladestation nach Anspruch 1 oder 2,
**dadurch gekennzeichnet, dass** der Gleichrichter (16) dazu eingerichtet ist, die kapazitive Blindleistung abhängig von der Höhe der Versorgungsspannung am netzseitigen Wechselstromanschluss (10) bereitzustellen.

4. Ladestation nach Anspruch 3,
**dadurch gekennzeichnet, dass** der Gleichrichter (16) dazu eingerichtet ist, die Höhe der am netzseitigen Wechselstromanschluss (10) bereitgestellten kapazitiven Blindleistung abhängig von der Höhe der Versorgungsspannung am netzseitigen Wechselstromanschluss (10) zu steuern.

5. Ladestation nach Anspruch 4,
**dadurch gekennzeichnet, dass** der Gleichrichter (16) dazu eingerichtet ist, die Höhe der am netzseitigen Wechselstromanschluss (10) bereitgestellten kapazitiven Blindleistung so einzustellen, dass eine vorgegebene oder vorgebbare Wirkleistung erreicht wird.

6. Ladestation nach einem der Ansprüche 1 bis 5,
**dadurch gekennzeichnet, dass** die Bereitstellung der kapazitiven Blindleistung für die Zeitdauer eines laufenden Ladevorgangs erfolgt.

7. Ladestation nach einem der Ansprüche 2 bis 6,
**dadurch gekennzeichnet, dass** die Steuereinrichtung (18, 34) dazu eingerichtet ist, eine Steuerung der Ladestation (2) entsprechend einem Verfahren nach einem der Ansprüche 8 bis 12 zu steuern.

8. Verfahren zum Steuern einer Ladestation (2), ausgeführt auf mindestens einer Steuereinrichtung (18, 34) einer Ladestation (2), insbesondere einer Ladestation nach einem der Ansprüche 1 bis 7,
- bei dem ein netzseitig bereitgestellter Wechselstrom zu einem Gleichstrom gleichgerichtet und als Ladestrom zum Laden eines elektrisch betriebenen Fahrzeugs (4) bereitgestellt wird und
- bei dem am netzseitigen Wechselstromanschluss kapazitive Blindleistung bereitgestellt wird.

9. Verfahren nach Anspruch 8,
**dadurch gekennzeichnet, dass** die kapazitive Blindleistung abhängig von der Höhe der Versorgungsspannung am netzseitigen Wechselstromanschluss (10) bereitgestellt wird.

10. Verfahren nach Anspruch 9,
**dadurch gekennzeichnet, dass** die Höhe der am netzseitigen Wechselstromanschluss (10) bereitgestellten kapazitiven Blindleistung abhängig von der Höhe der Versorgungsspannung am netzseitigen Wechselstromanschluss (10) gesteuert wird.

11. Verfahren nach Anspruch 10,
**dadurch gekennzeichnet, dass** die Höhe der am netzseitigen Wechselstromanschluss (10) bereitgestellten kapazitiven Blindleistung so eingestellt wird, dass eine vorgegebene oder vorgebbare Abgabeleistung der vom Verteilnetz (14) an die Ladestation (2) abgegebenen elektrischen Wirkleistung erreicht wird.

12. Verfahren nach einem der Ansprüche 8 bis 11,
**dadurch gekennzeichnet, dass** die Bereitstellung der kapazitiven Blindleistung für die Zeitdauer eines laufenden Ladevorgangs erfolgt.
